# EUROPÄISCHE PATENTSCHRIFT

(11) **EP 4 381 529 B1**
(45) Veröffentlichungstag und Bekanntmachung des Hinweises auf die Patenterteilung: **02.04.2025**
(21) Anmeldenummer: 22764332.7
(22) Anmeldetag: 05.08.2022
(51) Int. Cl.: H01B 13/012, H01B 7/00

(54) **KABELBAUM UND ANORDNUNG MIT SOLCH EINEM KABELBAUM**
CABLE HARNESS AND ARRANGEMENT WITH SUCH A CABLE HARNESS
FAISCEAU DE CÂBLES ET AGENCEMENT DOTÉ D'UN TEL FAISCEAU DE CÂBLES

(30) Priorität: 06.08.2021 DE 102021120520
(43) Veröffentlichungstag der Anmeldung: 12.06.2024
(73) Patentinhaber: Yazaki Systems Technologies GmbH, 93059 Regensburg (DE)
(72) Erfinder: CHOUDHURY, Nupur, 93049 Regensburg (DE); EINERT, Martin, 93077 Bad Abbach (DE)
(74) Vertreter: Patentanwaltskanzlei WILHELM & BECK
(86) Internationale Anmeldenummer: PCT/EP2022/072058
(87) Internationale Veröffentlichungsnummer: WO 2023/012326

(56) Entgegenhaltungen:
- EP-A1- 2 487 692
- EP-A1- 2 535 902
- EP-A1- 3 851 331
- WO-A1-98/35856
- DE-A1- 102016 108 522
- DE-A1- 102019 129 488

## Beschreibung

Die Erfindung betrifft einen Kabelbaum gemäß Patentanspruch 1 und eine Anordnung mit solch einem Kabelbaum gemäß Patentanspruch 10.

Diese Patentanmeldung beansprucht die Priorität der deutschen Patentanmeldung 10 2021 120 520.4, deren Offenbarungsgehalt hiermit durch Rückbezug aufgenommen wird.

Aus der WO 2017/194538 A1 ist ein Kabelbaum mit einer Schaumummantelung und einem Kabelbündel bekannt, wobei das Kabelbündel in der Schaumummantelung eingebettet ist.

Ferner sind aus EP 2 535 902 A1 und WO 98/35856 A1 Verfahren zur Herstellung eines Kabelbaums bekannt.

Es ist Aufgabe der Erfindung, einen verbesserten Kabelbaum und eine verbesserte Anordnung bereitzustellen.

Diese Aufgabe wird mittels eines Kabelbaums gemäß Patentanspruch 1 und einer Anordnung gemäß Patentanspruch 10 gelöst. Vorteilhafte Ausführungsformen sind in den abhängigen Ansprüchen angegeben.

Es wurde erkannt, dass ein verbesserter Kabelbaum für ein Kraftfahrzeug dadurch bereitgestellt werden kann, dass der Kabelbaum eine Schaumummantelung und wenigstens ein erstes Kabelbündel mit einem ersten elektrischen Kabel und einem zweiten elektrischen Kabel aufweist. Das erste Kabelbündel ist zumindest abschnittsweise in der Schaumummantelung eingebettet und die Schaumummantelung verbindet mechanisch das erste elektrische Kabel mit dem zweiten elektrischen Kabel. Der Kabelbaum formt in zumindest einem ersten Teilabschnitt eine erste Aufnahme aus. Die erste Aufnahme ist ausgebildet, ein Fahrzeugbauteil des Kraftfahrzeugs zumindest abschnittsweise aufzunehmen. Die Schaumummantelung ist in wenigstens einem ersten Teilabschnitt des Kabelbaums ausgebildet, eine Innenseite der Aufnahme an das Fahrzeugbauteil zur Ausbildung einer ersten reibschlüssigen Verbindung mit dem Fahrzeugbauteil anzupressen.

Der Kabelbaum weist zumindest im ersten Teilabschnitt einen ersten Schenkel, einen zweiten Schenkel und einen dritten Schenkel auf. Der zweite Schenkel und der dritte Schenkel sind beabstandet zueinander an dem ersten Schenkel an einer gemeinsamen Seite des ersten Schenkels angeordnet. Der erste bis dritte Schenkel begrenzen gemeinsam die erste Aufnahme. In einem der Schenkel ist das erste Kabelbündel angeordnet. Die anderen Schenkel werden vorzugsweise durch die Schaumummantelung ausschließlich ausgeformt. Diese Ausgestaltung hat den Vorteil, dass eine Spannkraft, mit der der Kabelbaum an der Innenseite gegen das Fahrzeugbauteil presst, definiert durch die Schaumummantelung eingestellt werden kann.

Diese Ausgestaltung hat den Vorteil, dass der Kabelbaum ohne weitere Befestigungsmittel an dem Fahrzeugbauteil befestigt werden kann. Ferner schmiegt sich der Kabelbaum durch die Schaumummantelung an eine Kontur des Fahrzeugbauteils an, sodass Fertigungstoleranzen am Fahrzeugbauteil durch die Schaumummantelung und den Kabelbaum ausgeglichen werden.

In einer weiteren Ausführungsform ist der Kabelbaum zumindest im ersten Teilabschnitt C-förmig oder U-förmig oder M-förmig ausgeformt. Diese Ausgestaltung eignet sich besonders gut, um die erste Aufnahme auszuformen und besonders gut den Kabelbaum an dem Fahrzeugbauteil zu befestigen.

In einer weiteren Ausführungsform erstrecken sich das erste Kabel und das zweite Kabel im Wesentlichen entlang einer Geraden, wobei die erste Aufnahme in einer ersten Richtung geneigt zu der Geraden breiter ausgebildet ist als in eine zweite Richtung geneigt zu der ersten Richtung und der Geraden. Dadurch kann der Kabelbaum besonders gut einen Holm oder eine Fahrzeugsäule umgreifen und daran befestigt werden.

In einer weiteren Ausführungsform weist der Kabelbaum ein zweites Kabelbündel mit wenigstens einem dritten elektrischen Kabel auf, wobei das zweite Kabelbündel beabstandet zu dem ersten Kabelbündel in der Schaumummantelung parallel zu dem ersten Kabelbündel verlaufend eingebettet ist. Die Schaumummantelung verbindet das erste Kabelbündel mechanisch mit dem zweiten Kabelbündel. Durch die beabstandete Anordnung des ersten Kabelbündels und des zweiten Kabelbündels sowie die Schaumummantelung zwischen den beiden Kabelbündeln wird einerseits eine gegenseitige Störung der Kabelbündel, beispielsweise wenn das dritte Kabel beispielsweise als Antennenkabel ausgebildet ist und über das erste Kabelbündel eine elektrische Leistung übertragen wird, zuverlässig verhindert. Ferner ist der Montageaufwand in dem Kraftfahrzeug zum Verlegen der beiden Kabelbündel durch die Zusammenfassung in den Kabelbaum stark reduziert.

In einer weiteren Ausführungsform ist das erste Kabelbündel im ersten Schenkel verlaufend angeordnet, wobei das zweite Kabelbündel im zweiten Schenkel verlaufend angeordnet ist. Diese Ausgestaltung hat den Vorteil, dass der dritte Schenkel besonders dünnwandig verglichen mit dem zweiten Schenkel oder dem ersten Schenkel ausgebildet sein kann. Insbesondere bei beengten Bauraumverhältnissen, beispielsweise am Dachhimmel, ist dies von Vorteil. Alternativ sind das erste Kabelbündel im zweiten Schenkel und das zweite Kabelbündel im dritten Schenkel verlaufend angeordnet. Diese Ausgestaltung hat den Vorteil, dass ein Abstand zwischen dem ersten Kabelbündel und dem zweiten Kabelbündel besonders groß ist und dabei eine gegenseitige Beeinflussung von Signalen, die über zumindest eines der beiden Kabelbündel übertragen werden, vermieden werden kann.

In einer weiteren Ausführungsform ist der zweite Schenkel an einem ersten festen Ende mit dem ersten Schenkel verbunden. An einem zum ersten festen Ende beabstandet angeordneten ersten freien Ende des zweiten Schenkels ist der zweite Schenkel gegenüber dem ersten festen Ende verdickt oder verjüngt ausgebildet. In der verdickten Ausgestaltung wird eine besonders hohe Spannkraft zum Anpressen der Innenseite an das Fahrzeugbauteil bereitgestellt, sodass die erste reibschlüssige Verbindung besonders gut und haltbar ausgebildet ist. Die verjüngte Ausgestaltung hat den Vorteil, dass ein Bauraumbedarf besonders gering ist und auch in beengten Verhältnissen der Kabelbaum gut das Fahrzeugbauteil aufnehmen und umgreifen kann.

In einer weiteren Ausführungsform ist die erste Aufnahme parallel zu dem ersten Kabelbündel geführt. Diese Ausgestaltung eignet sich insbesondere, wenn beispielsweise der Kabelbaum entlang einer Fahrzeugsäule, beispielsweise entlang der A- oder B-Säule von unten nach oben Richtung Dachhimmel geführt ist. Alternativ kann das erste Kabelbündel im Wesentlichen der Innenseite der ersten Aufnahme folgend um die erste Aufnahme geführt in der Schaumummantelung angeordnet sein. Diese Ausgestaltung hat den Vorteil, dass beispielsweise der Kabelbaum durch das Umgreifen beispielsweise eines Längsträgers und bei der Herumführung um den Längsträger an dem Längsträger gehalten wird, ohne dass zusätzliche weitere Befestigungsmittel notwendig sind, um den Kabelbaum beispielsweise am Längsträger zu befestigen.

In einer weiteren Ausführungsform weist die Schaumummantelung im ersten Teilabschnitt des Kabelbaums eine Ausbuchtung mit einer Anlagefläche auf, wobei die Ausbuchtung in die erste Aufnahme ragt. Die Ausbuchtung ist ausgebildet, in eine zweite Aufnahme des Fahrzeugbauteils einzugreifen und eine zweite reibschlüssige Verbindung mit dem Fahrzeugbauteil auszubilden. Diese Ausgestaltung hat den Vorteil, dass insbesondere, wenn die Ausbuchtung am ersten Schenkel angeordnet ist, der erste Schenkel zusätzlich zu der ersten reibschlüssigen Verbindung am Fahrzeugbauteil fixiert wird. Besonders bei einer breiten Ausgestaltung des ersten Schenkels wird dadurch ein Schlackern oder Klappern des Kabelbaums am ersten Schenkel durch die zweite reibschlüssige Verbindung verhindert.

Die Aufgabe wird aber auch mit einer Anordnung mit einem Kabelbaum und einem Fahrzeugbauteil gelöst. Der Kabelbaum ist wie oben beschrieben ausgebildet. Das Fahrzeugbauteil greift zumindest abschnittsweise in die erste Aufnahme ein. Die Schaumummantelung ist mechanisch gespannt und presst die Innenseite der ersten Aufnahme derart gegen das Fahrzeugbauteil, dass die Innenseite mit dem Fahrzeugbauteil die erste reibschlüssige Verbindung ausbildet. Dadurch wird der Kabelbaum sicher an dem Fahrzeugbauteil befestigt. Des Weiteren ist der Kabelbaum besonders einfach durch ein Aufpressen oder Aufdrücken der ersten Aufnahme auf das Fahrzeugbauteil befestigbar. Ferner bildet die Schaumummantelung einen Klapperschutz aus und auf weitere Befestigungsmittel kann verzichtet werden. Des Weiteren ist durch das Aufstecken der ersten Aufnahme auf das Fahrzeugbauteil eine Montage des Kabelbaums auch unter beengten Verhältnissen möglich. Auch eine automatisierte Montage ist möglich. Des Weiteren schützt die Schaumummantelung den Kabelbaum, insbesondere vor Schwingungsbrüchen.

In einer weiteren Ausführungsform weist das Fahrzeugbauteil eine Ausformung, insbesondere eine Wölbung und/oder eine Fahrzeugsäule und/oder ein Holm und/oder einen Falz und/oder ein Dachhimmel auf. Die erste Aufnahme nimmt die Ausformung auf. Von besonderem Vorteil ist, wenn die Ausformung die erste Aufnahme, vorzugsweise vollständig, ausfüllt.

Von besonderem Vorteil ist, wenn die Innenseite vollflächig und/oder zu wenigstens 80% einer Fläche der Innenseite an der Ausformung anliegt.

In einer weiteren Ausführungsform ist das Fahrzeugbauteil ein fünftes elektrisches Kabel, wobei das fünfte elektrische Kabel in der ersten Aufnahme angeordnet ist, wobei die Schaumummantelung die erste Innenseite der ersten Aufnahme umfangsseitig gegen eine Ummantelung des fünften elektrischen Kabels drückt und die erste reibschlüssige Verbindung mit der Ummantelung ausbildet. Zusätzlich kann die erste Innenseite der ersten Aufnahme das fünfte elektrische Kabel umgreifen, sodass das fünfte elektrische Kabel sowohl kraftschlüssig als auch formschlüssig in der ersten Aufnahme befestigt ist.

Das fünfte elektrische Kabel kann beispielsweise eine Reservelitze sein, die gezogen werden muss, weil beispielsweise das erste elektrische Kabel des ersten Kabelbündels beschädigt ist. Mittels des fünften elektrischen Kabels kann beispielsweise das erste elektrische Kabel überbrückt werden, sodass ein Tausch des Kabelbaums nicht notwendig ist. Auch kann das fünfte elektrische Kabel beispielsweise dazu dienen, um Sonderbauteile, beispielsweise eine Anhängerkupplung, eine Rückfahrkamera oder andere Sonderausstattungen nachträglich zu verkabeln und elektrisch anzuschließen.

In einer weiteren Ausführungsform ist in der Ausformung des Fahrzeugbauteils eine zweite Aufnahme angeordnet, wobei die Ausbuchtung in die zweite Aufnahme eingreift. Der Schaumwerkstoff der Ausbuchtung ist in der zweiten Aufnahme verpresst und der Schaumwerkstoff presst eine äußere Umfangsseite der Ausbuchtung an eine Aufnahmeseitenfläche der zweiten Aufnahme und bildet die zweite reibschlüssige Verbindung zwischen der zweiten Aufnahme und der Ausbuchtung aus. Dadurch wird der Kabelbaum besonders gut am Fahrzeugbauteil befestigt.

In einer weiteren Ausführungsform ist das Fahrzeugbauteil ein Sub-Kabelbaum, wobei der Sub-Kabelbaum wenigstens ein sechstes Kabel, ein siebtes Kabel und eine Ummantelung aufweist, wobei die Ummantelung das sechste Kabel mit dem siebten Kabel verbindet und zumindest umfangsseitig das sechste Kabel und das siebte Kabel umgreift, wobei der Sub-Kabelbaum in der ersten Aufnahme angeordnet ist, wobei die Schaumummantelung die Innenseite der ersten Aufnahme umfangsseitig gegen die Ummantelung des Sub-Kabelbaums drückt und die erste reibschlüssige Verbindung mit der Ummantelung ausbildet. Dadurch kann der Sub-Kabelbaum besonders einfach im Fahrzeug befestigt werden. Der Sub-Kabelbaum kann beispielweise dazu dienen, einen Sensor mit dem zugeordneten Steuergerät elektrisch zu verbinden. Dabei ist der Sub-Kabelbaum in einer räumlichen Erstreckung im Querschnitt kleiner ausgebildet als der Kabelbaum, sodass der Sub-Kabelbaum in der Aufnahme angeordnet sein kann.

Nachfolgend wird die Erfindung anhand von Figuren näher erläutert. Dabei zeigen:
- Fig. 1: eine perspektivische Darstellung eines Kraftfahrzeugs mit einem Kabelbaum gemäß einer ersten Ausführungsform;
- Fig. 2: einen in Fig. 1 markierten Ausschnitt A des in Fig. 1 gezeigten Kabelbaums;
- Fig. 3: eine Schnittansicht entlang einer in Fig. 2 gezeigten Schnittebene B-B durch die in Fig. 1 gezeigte Anordnung;
- Fig. 4: eine Seitenansicht eines Fahrzeugbauteils des Kraftfahrzeugs mit einer vergrößerten Darstellung eines Ausschnitts des Fahrzeugbauteils;
- Fig. 5A: einen Ausschnitt eines Kabelbaums gemäß einer zweiten Ausführungsform;
- Fig. 5B und 5C: jeweils einen Ausschnitt einer Variante der in Fig. 5A gezeigten zweiten Ausführungsform des Kabelbaums;
- Fig. 6: eine perspektivische Darstellung eines Ausschnitts eines Kraftfahrzeugs mit einem Kabelbaum gemäß einer dritten Ausführungsform;
- Fig. 7: einen in Fig. 6 markierten Ausschnitt C des Kraftfahrzeugs in teilmontiertem Zustand;
- Fig. 8: eine perspektivische Darstellung einer Form zur Herstellung eines Kabelbaums gemäß einer vierten Ausführungsform;
- Fig. 9: eine perspektivische Darstellung der in Fig. 8 gezeigten Form;
- Fig. 10: eine perspektivische Darstellung einer Anordnung mit einem Kabelbaum gemäß einer fünften Ausführungsform;
- Fig. 11: eine perspektivische Schnittansicht durch eine Anordnung mit einem Kabelbaum gemäß einer sechsten Ausführungsform;
- Fig. 12: eine perspektivische Explosionsdarstellung einer Anordnung von Komponenten des Kraftfahrzeugs;
- Fig. 13: eine Schnittansicht entlang einer in Fig. 12 gezeigten Schnittebene D-D durch den in Fig. 12 gezeigten Kabelbaum;
- Fig. 14: eine perspektivische Schnittansicht durch eine Anordnung mit einem Kabelbaum gemäß einer siebten Ausführungsform.

In den nachfolgenden Figuren wird auf ein Koordinatensystem zum erleichterten Verständnis Bezug genommen. Das Koordinatensystem ist beispielhaft als Rechtssystem ausgebildet und weist eine x-Achse (Längsrichtung), eine y-Achse (Querrichtung) und eine z-Achse (Höhenrichtung) auf.

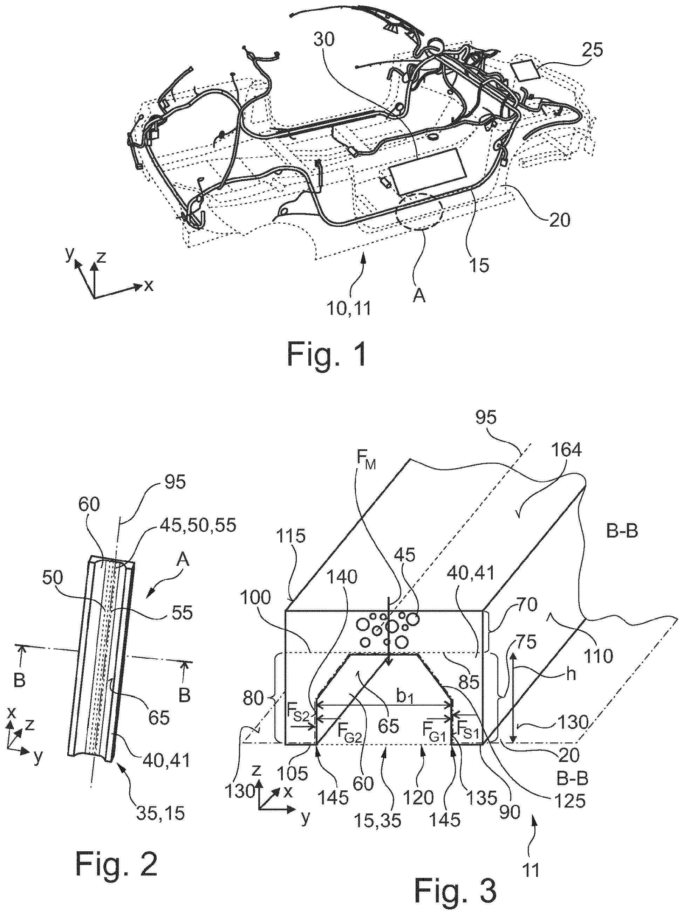

Fig. 1 zeigt eine perspektivische Darstellung eines Kraftfahrzeugs 10 mit einem Kabelbaum 15 gemäß einer ersten Ausführungsform.

Das Kraftfahrzeug 10 weist wenigstens eine Anordnung 11 aus einem Kabelbaum 15 und einem Fahrzeugbauteil 20 auf. In Fig. 1 ist das Fahrzeugbauteil 20 eine Karosserie des Kraftfahrzeugs 10, das in Fig. 1 strichliert dargestellt ist. Der Kabelbaum 15 folgt einer Kontur des Fahrzeugbauteils 20. Der Kabelbaum 15 dient dazu, elektrische Komponenten 25, 30, beispielsweise ein Steuergerät 25 mit einer elektrischen Energiequelle 30, elektrisch zu verbinden. Die Verbindung kann sowohl datentechnisch als auch leistungselektrisch sein.

Fig. 2 zeigt einen in Fig. 1 markierten Ausschnitt A des in Fig. 1 gezeigten Kabelbaums 15.

Der Kabelbaum 15 weist zumindest in einem ersten Teilabschnitt 35 eine Schaumummantelung 40 und wenigstens ein erstes Kabelbündel 45 (strichliert in Fig. 2 dargestellt) auf. Das erste Kabelbündel 45 ist zumindest teilweise, vorzugsweise vollständig, in der Schaumummantelung 40 eingebettet. Dabei wird unter einem Einbetten verstanden, dass die Schaumummantelung 40 das erste Kabelbündel 45 umfangsseitig, vorzugsweise vollständig, umschließt.

Das erste Kabelbündel 45 weist wenigstens ein erstes elektrisches Kabel 50 und ein zweites elektrisches Kabel 55 auf. In der Ausführungsform verlaufen beispielhaft das erste elektrische Kabel 50 und das zweite elektrische Kabel 55 im Wesentlichen entlang einer Geraden 95, die beispielsweise parallel zur x-Achse verläuft. Die Schaumummantelung 40 verbindet das erste elektrische Kabel 50 mechanisch mit dem zweiten elektrischen Kabel 55 zu dem ersten Kabelbündel 45. Das erste elektrische Kabel 50 und das zweite elektrische Kabel 55 können beispielsweise in einem lockeren Verbund in der Schaumummantelung 40 angeordnet sein und müssen nicht direkt aneinandergepresst sein. Auf eine Umwicklung der Kabel 50, 55 wird verzichtet.

Der Kabelbaum 15 weist zumindest im ersten Teilabschnitt 35 eine erste Aufnahme 60 auf. Die erste Aufnahme 60 verläuft vorzugsweise parallel zu dem ersten Kabelbündel 45 entlang der Geraden 95 in ihrer Haupterstreckungsrichtung. Die erste Aufnahme 60 ist vorzugsweise zumindest abschnittsweise korrespondierend zu dem Fahrzeugbauteil 20 ausgebildet. Die erste Aufnahme 60 weist eine Innenseite 65 auf.

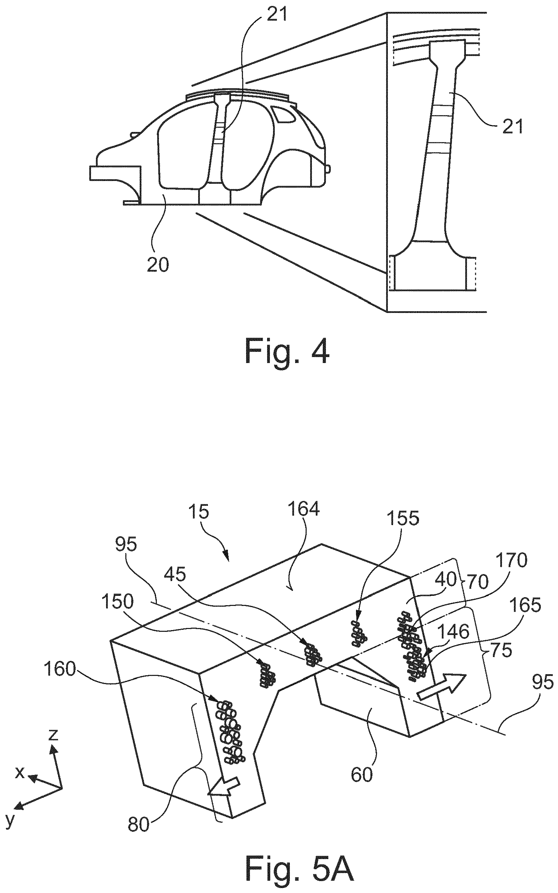

Fig. 3 zeigt eine Schnittansicht entlang einer in Fig. 2 gezeigten Schnittebene B-B durch die in Fig. 1 gezeigte Anordnung 11. Fig. 4 zeigt eine Seitenansicht des Fahrzeugbauteils 20 des Kraftfahrzeugs 10 mit einer vergrößerten Darstellung eines Ausschnitts des Fahrzeugbauteils 20 (B-Säule).

Der Kabelbaum 15 ist beispielsweise im ersten Teilabschnitt 35 im Wesentlichen U-förmig ausgebildet. Dabei erstreckt sich beispielsweise die erste Aufnahme 60 im Wesentlichen parallel zum ersten Kabelbündel 45 entlang der Geraden 95 in x-Richtung. Das erste Kabelbündel 45 ist vorteilhafterweise derart durch die Schaumummantelung 40 ummantelt, dass das erste Kabelbündel 45 beabstandet zu der Innenseite 65 der ersten Aufnahme 60 verläuft.

Im ersten Teilabschnitt 35 weist der Kabelbaum 15 beispielsweise einen ersten Schenkel 70, einen zweiten Schenkel 75 und einen dritten Schenkel 80 auf. Der zweite Schenkel 75 und der dritte Schenkel 80 sind in Querrichtung beabstandet zueinander angeordnet auf einer gemeinsamen Seite des ersten Schenkels 70 angeordnet. Der erste bis dritte Schenkel 70, 75, 80 begrenzen gemeinsam die erste Aufnahme 60.

Der erste Schenkel 70 ist in Fig. 3 beispielsweise im Wesentlichen plattenförmig ausgebildet. Dabei ist das erste Kabelbündel 45 in dem ersten Schenkel 70 angeordnet. Das erste Kabelbündel 45 kann in Querrichtung im Wesentlichen in mittiger Lage zu einer maximalen Quererstreckung des ersten Schenkels 70 positioniert sein. In Fig. 3 schließen sich unterseitig an den ersten Schenkel 70 der zweite Schenkel 75 und der dritte Schenkel 80 an. Dabei ist der zweite Schenkel 75 an einem ersten festen Ende 85 mit dem ersten Schenkel 70 verbunden. Hin zu einem ersten freien Ende 90 verjüngt sich beispielsweise der zweite Schenkel 75. In Fig. 3 ist das erste freie Ende 90 beispielsweise unterseitig am Kabelbaum 15 beispielhaft angeordnet.

Der dritte Schenkel 80 ist an einem zweiten festen Ende 100 mit dem ersten Schenkel 70 verbunden. Hin zu einem zweiten freien Ende 105 verjüngt sich beispielsweise der dritte Schenkel 80. Das erste freie Ende 90 und das zweite freie Ende 105 sind beispielhaft in einer gemeinsamen Ebene, die beispielsweise als xy-Ebene ausgebildet sein kann, angeordnet.

Der Kabelbaum 15 weist beispielhaft eine erste Seitenfläche 110 und eine in Querrichtung gegenüberliegend angeordnete zweite Seitenfläche 115 auf. Die erste Seitenfläche 110 und die zweite Seitenfläche 115 sind beispielhaft jeweils plan ausgebildet und erstrecken sich beispielhaft jeweils in einer xz-Ebene. An die erste Seitenfläche 110 schließt sich nach innen hin der erste Schenkel 70 und unterseitig des ersten Schenkels 70 der zweite Schenkel 75 an. In Querrichtung gegenüberliegend schließt sich an die zweite Seitenfläche 115 der erste Schenkel 70 und unterseitig in Fig. 3 der dritte Schenkel 80 an. Die erste Seitenfläche 110 erstreckt sich somit beispielhaft über den ersten und zweiten Schenkel 70, 75, während hingegen die zweite Seitenfläche 115 sich über den ersten Schenkel 70 und den dritten Schenkel 80 hinweg erstreckt.

Durch die verjüngende Ausgestaltung des zweiten und dritten Schenkels 75, 80 nimmt eine Innenbreite b₁ der ersten Aufnahme 60 mit zunehmendem ersten Abstand von dem ersten Schenkel 70 zu. Unterseitig ist die erste Aufnahme 60 an einer Öffnung 120 offen ausgebildet.

Von besonderem Vorteil ist hierbei, wenn eine maximale Innenbreite b1 der Aufnahme 60 in Querrichtung breiter ist als eine maximale Höhe h der Aufnahme 60 und/oder des zweiten Schenkels 75 und/oder des dritten Schenkels 80.

In Fig. 3 ist mittels strichpunktierter Linie das Fahrzeugbauteil 20 von Fig. 4 schematisch angedeutet. Das Fahrzeugbauteil 20 weist in der Ausführungsform beispielsweise eine Ausformung 125 auf. Die Ausformung 125 ist beispielsweise als Ausbuchtung ausgebildet und überragt eine Fahrzeugbauteilfläche 130 des Fahrzeugbauteils 20. Dabei ist in montiertem Zustand des Kabelbaums 15 an dem Fahrzeugbauteil 20 die erste Aufnahme 60 korrespondierend zu der Ausformung 125 ausgebildet und an die Ausformung 125 angeschmiegt.

Die Ausformung 125 kann beispielsweise ein Holm, beispielsweise ein Längsholm des Fahrzeugbauteils 20 sein. Auch könnte beispielsweise die Ausformung 125 an einer Fahrzeugsäule 21, beispielsweise einer A- oder einer B-Säule, ausgeformt sein (vgl. Fig. 4). Die Fahrzeugbauteilfläche 130 kann sich beispielsweise im Wesentlichen in xy-Richtung erstrecken. Dabei kann beispielsweise die Fahrzeugbauteilfläche 130 ein Fahrzeugboden oder ein Falz an der Fahrzeugsäule des Kraftfahrzeugs 10 sein.

In montiertem Zustand des Kabelbaums 15 an dem Fahrzeugbauteil 20 nimmt die erste Aufnahme 60 die Ausformung 125 derart auf, dass die erste Aufnahme 60 durch die Ausformung 125 ausgefüllt ist und beispielsweise die Innenseite 65 im Wesentlichen vollflächig und/oder zu wenigstens 80% einer Fläche der Innenseite 65 an der Ausformung 125 anliegt. Dabei kann das erste und/oder zweite freie Ende 90, 105 des Kabelbaums 15 an die Fahrzeugbauteilfläche 130 anstoßen.

Die Schaumummantelung 40 weist wenigstens einen der folgenden Schaumwerkstoffe 41 auf: Hartschaum, geschlossen-poriger Schaum, Polyurethan, Polystyrol, Schaumwerkstoff mit einer Druck-Elastizitätsmodul von 3 N/mm² bis 10 N/mm². Ferner kann der Schaumwerkstoff 41 besonders abriebfest sein.

Durch die Anordnung des ersten Kabelbündels 45 in dem ersten Schenkel 70 sind der zweite Schenkel 75 und der dritte Schenkel 80 ausschließlich vorzugsweise aus der Schaumummantelung 40 ausgeformt. Die mittige Lage des ersten Kabelbündels 45 zu der maximalen Quererstreckung des ersten Schenkels 70 hat den Vorteil, dass in Querrichtung in beide Richtungen der erste Schenkel 70 ein im Wesentlichen identisches Biegeverhalten bezogen auf die Gerade 95 aufweist.

In montiertem Zustand des Kabelbaums 15 an dem Fahrzeugbauteil 20 ist die erste Aufnahme 60 in Querrichtung bezogen auf einen demontierten Zustand des Kabelbaums 15 aufgeweitet. Dies bedeutet, dass die Innenbreite b₁ der ersten Aufnahme 60 in montiertem Zustand an dem Fahrzeugbauteil 20 größer ist als in demontiertem Zustand.

Die Schaumummantelung 40 ist beispielsweise derartig steif ausgebildet, dass in montiertem Zustand die Schaumummantelung 40 gespannt ist und als (Bügel-)Feder wirkt. Dabei stellt der zweite Schenkel 75 eine erste Spannkraft F_{S1} bereit, die in Querrichtung gegen eine erste Außenfläche 135 der Ausformung 125 wirkt. Ferner stellt der dritte Schenkel 80 eine zweite Spannkraft F_{S2} bereit, die in Querrichtung gegen eine zweite Außenfläche 140 der Ausformung 125 wirkt. Dabei ist in Querrichtung die zweite Außenfläche 140 gegenüberliegend zur ersten Außenfläche 135 angeordnet. Die erste Spannkraft F_{S1} und die zweite Spannkraft F_{S2} sind gegeneinander gerichtet.

Die erste Außenfläche 135 stellt eine erste Gegenkraft F_{G1} und die zweite Außenfläche 140 stellt eine zweite Gegenkraft F_{G2} bereit. Die erste Gegenkraft F_{G1} wirkt in Querrichtung gegen die erste Spannkraft F_{S1}. Die zweite Gegenkraft F_{G2} wirkt in Querrichtung in entgegengesetzter Richtung zu der ersten Gegenkraft F_{G1} und gegen die zweite Spannkraft F_{S2}. Durch das Anpressen der Innenseite 65 durch die Schaumummantelung 40 gegen die erste Außenfläche 135 auf der einen Seite der Ausformung 125 und der zweiten Außenfläche 140 der Ausformung 125 auf der anderen Seite bildet die Schaumummantelung 40 an der Innenseite 65 zu der jeweils zugeordneten Außenfläche 135, 140 eine erste reibschlüssige Verbindung 145 aus. Mittels der ersten reibschlüssigen Verbindung 145 ist der Kabelbaum 15 an der Ausformung 125 und somit am Fahrzeugbauteil 20 befestigt. Diese Ausgestaltung hat den Vorteil, dass auf weitere Befestigungsmittel, insbesondere auf Clips, Halter oder ähnliches verzichtet werden kann.

Der erste Teilabschnitt 35 wird an dem Fahrzeugbauteil 20 dadurch montiert, dass mittels einer Montagekraft F_{M}, die über eine Oberseite 164 in den Kabelbaum 15 einleitbar ist, der Kabelbaum 15 mit der ersten Aufnahme 60 auf die Ausformung 125 aufgedrückt wird.

Fig. 5A zeigt einen Ausschnitt eines Kabelbaums 15 gemäß einer zweiten Ausführungsform.

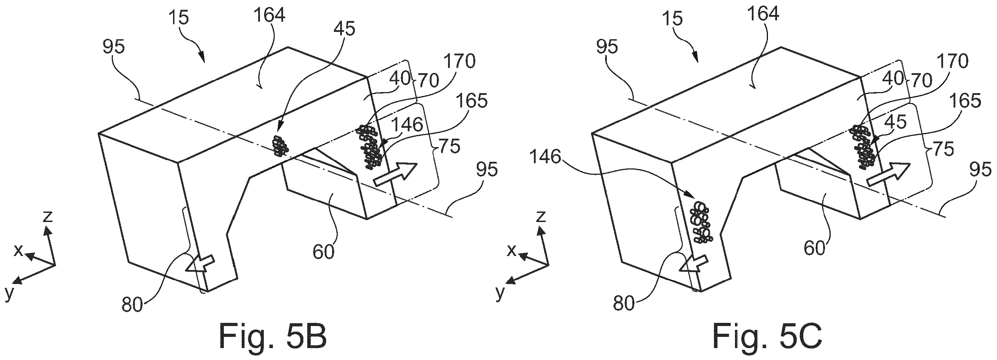

Der Kabelbaum 15 in Fig. 5 ist im Wesentlichen identisch zu dem in den Figuren 1 bis 3 gezeigten Kabelbaum 15 ausgebildet. Im Folgenden wird ausschließlich auf die Unterschiede des in Fig. 5 gezeigten Kabelbaums 15 gegenüber dem in den Figuren 1 bis 3 gezeigten Kabelbaum 15 eingegangen.

Abweichend von dem in den Figuren 1 bis 3 gezeigten Kabelbaum 15 weist der in Fig. 5 gezeigte Kabelbaum 15 wenigstens ein zweites Kabelbündel 146 auf. Das zweite Kabelbündel 146 weist beispielsweise ein drittes Kabel 165 und ein parallel zu dem dritten Kabel 165 verlaufendes viertes Kabel 170 auf. Zusätzlich kann der Kabelbaum 15, wie in Fig. 5 beispielhaft dargestellt, ein drittes, viertes und fünftes Kabelbündel 150, 155, 160 aufweisen. Die in Figur 5 gezeigten Kabelbündel 45, 146, 150, 155, 160 sind beispielhaft. Auch eine andere Anzahl von Kabelbündeln 45, 146, 150, 155, 160 ist möglich. Beispielhaft ist, wie in Figuren 1 bis 3 gezeigt, das erste Kabelbündel 45 in mittiger Lage in y-Richtung im ersten Schenkel 70 angeordnet. Das zweite Kabelbündel 146 ist beabstandet zum ersten Kabelbündel 45 angeordnet. Dabei kann das zweite Kabelbündel 146 beispielsweise im zweiten Schenkel 75 angeordnet sein. Das zweite Kabelbündel 146 ist beispielsweise nur durch die Schaumummantelung 40 mechanisch mit dem ersten Kabelbündel 45 verbunden. Durch die zu dem ersten Kabelbündel 45 räumlich beabstandete Anordnung des zweiten Kabelbündels 146 sowie der zwischen den Kabelbündel 45, 146 angeordneten Schaumummantelung 40 kann eine gegeneinander mögliche Beeinflussung der Kabelbündel 45, 146 aufgrund elektromagnetischer Felder vermieden werden.

Das zweite Kabelbündel 146 eignet sich beispielsweise, um ein Datensignal im Wesentlichen störungsfrei gegenüber zu übertragen. Mittels des ersten Kabelbündels 45 kann beispielsweise eine elektrische Leistung übertragen werden. Die mechanische Verbindung zwischen dem ersten Kabelbündel 45 und dem zweiten Kabelbündel 146 hat weiter den Vorteil, dass der Kabelbaum 15 besonders schnell montiert werden kann. Insbesondere kann der Kabelbaum 15 durch ein Aufpressen auf einer der ersten Aufnahme 60 abgewandten Oberseite 164 auf das Fahrzeugbauteil 20 montiert werden.

In Fig. 5A sind beispielhaft noch das dritte bis fünfte Kabelbündel 150, 155, 160 vorgesehen. Auch die dritten bis fünften Kabelbündel 150, 155, 160 sind jeweils nur mit den anderen Kabelbündeln 45, 146, 150, 155, 160 über die Schaumummantelung 40 mechanisch verbunden. Die Kabelbündel 45, 146, 150, 155, 160 verlaufen parallel zu der Geraden 95.

So kann beispielsweise das dritte Kabelbündel 150, das vierte Kabelbündel 155 und das fünfte Kabelbündel 160 in einem nicht dargestellten weiteren Nebenkabelbaum von dem in Fig. 5 gezeigten Kabelbaum 15 abzweigen. Dabei bildet der in Fig. 5 gezeigte Kabelbaum 15 einen Hauptkabelbaum aus, während hingegen, wenn sie separat geführt werden, das dritte bis fünfte Kabelbündel 150, 155, 160 dann jeweils einen Nebenkabelbaum ausbilden. Die Zusammenfassung der Kabelbündel 45, 146, 150, 155, 160 im ersten Teilabschnitt 35 zu dem Kabelbaum 15 hat somit den Vorteil, dass nur ein einziger Kabelbaum 15 zu verlegen ist und auch Abzweigungen der einzelnen Kabelbündel 45, 146, 150, 155, 160 aus dem Kabelbaum 15 durch die Schaumummantelung 40 vor einem Überknicken geschützt sind.

Diese Ausgestaltung hat den Vorteil, dass in einem Montageschritt alle Kabelbündel 45, 146, 150, 155, 160 an dem Fahrzeugbauteil 20, beispielsweise einem Karosserieelement einer Fahrzeugkarosserie, beispielsweise einer Fahrzeugsäule 21, beispielsweise der B-Säule, befestigt werden können.

Dadurch ist die Montage des Kabelbaums 15 besonders einfach und die Anordnung 11 besonders kostengünstig. Gegebenenfalls kann durch das Aufstecken oder Aufschieben des Kabelbaums 15 auf das Fahrzeugbauteil 20 und der sich automatisch ausbildenden ersten reibschlüssigen Verbindung 145 die Montage zumindest teilautomatisiert erfolgen.

Des Weiteren hat die in den Figuren 1 bis 5A gezeigte Ausgestaltung des Kabelbaums 15 den Vorteil, dass ein vorhandener Bauraum in dem Kraftfahrzeug 10 besonders gut ausgenützt wird. Des Weiteren wird eine besonders gute Signalübertragung sowohl von Datensignalen als auch von elektrischer Leistung durch die Trennung der Kabelbündel 45, 146, 150, 155, 160 über einen Querschnitt des Kabelbaums 15 sichergestellt.

Des Weiteren hat die Schaumummantelung 40 den Vorteil, dass durch den parallelen Verlauf der ersten Aufnahme 60 und der Kabel 50, 55, 165, 170 zueinander ein Anschmiegen der Schaumummantelung 40 an das Fahrzeugbauteil 20 erleichtert ist. Durch den Verzicht auf eine Umwicklung erlaubt die elastische Schaumummantelung 40 beim Aufschieben des Kabelbaums 15 auf das Fahrzeugbauteil 20 eine geringfügige Bewegung der Kabel 50, 55, 165, 170 im Kabelbündel 45, 146, 150, 155, 160 relativ zueinander. Dadurch kann der Kabelbaum 15 besonders gut um Kurven des Fahrzeugbauteils 20 verlegt werden.

Ferner kann durch die Schaumummantelung 40 die Bündelung der Kabel 50, 55, 165, 170 flexibel an eine Topologie und Geometrie des Fahrzeugbauteils 20 im Bauraumbereich des Kabelbaums 15 angepasst werden. Des Weiteren bietet die Schaumummantelung 40 einen besonders guten mechanischen Schlagschutz des Kabelbündels 45, 146, 150, 155, 160. Dadurch kann eine Beschädigung der Kabel 50, 55, 165, 170 in der Montage des Kraftfahrzeugs 10 vermieden werden. Zusätzlich sind durch die Schaumummantelung 40 die Kabelbündel 45, 146, 150, 155, 160 vor Feuchtigkeit und/oder korrosiven Medien, beispielsweise Kraftstoff und/oder Öl, geschützt. Dadurch eignet sich der in den Figuren 1 bis 5 gezeigte Kabelbaum 15 auch für eine Montage im Motorraum des Kraftfahrzeugs.

Des Weiteren wird ein Klapperschutz des Kabelbaums 15 durch die erste reibschlüssige Verbindung 145 des Kabelbaums 15 mit dem Fahrzeugbauteil 20 sichergestellt. Zusätzlich kann in die Schaumummantelung 40 ein Schutzelement, zum Beispiel in einen Protektor, eingesetzt werden, um beispielsweise den Kabelbaum 15 an scharfkantigen Fahrzeuggeometrien, beispielsweise einer Durchführung des Fahrzeugbauelements, insbesondere des Karosseriebauelements, durchzuführen. Durch die Verwendung eines abriebfesten Schaumwerkstoffs für die Schaumummantelung 40 kann ein zuverlässiger Schutz der Kabelbündel 45, 146, 150, 155, 160 auch an einer scharfkantigen Fahrzeuggeometrie sichergestellt werden. In diesem Sinne, übernimmt die Schaumummantelung 40 die Funktion eines Protektors oder eines Kabelschachts.

Fig. 5B zeigt eine erste Variante der in Fig. 5A gezeigten zweiten Ausführungsform des Kabelbaums 15.

Der Kabelbaum 15 in Fig. 5B ist im Wesentlichen identisch zu dem in Fig. 5A gezeigten Kabelbaum 15 ausgebildet. Im Folgenden wird ausschließlich auf die Unterschiede des in Fig. 5B gezeigten Kabelbaums 15 gegenüber dem in Fig. 5A den gezeigten Kabelbaum 15 eingegangen.

Beispielhaft wird auf das dritte bis fünfte Kabelbündel 150, 155, 160 verzichtet, sodass im dritten Schenkel 80 kein Kabelbündel 45, 146, 150, 155, 160 angeordnet ist und nur aus der Schaumummantelung 40 ausgebildet ist. Das erste Kabelbündel 45 ist dabei beispielhaft im ersten Schenkel 70 und das zweite Kabelbündel 146 ist beispielhaft im zweiten Schenkel 75 entlang der Geraden 95 verlaufend angeordnet.

Fig. 5C zeigt eine zweite Variante der in Fig. 5A gezeigten zweiten Ausführungsform des Kabelbaums 15.

Der Kabelbaum 15 in Fig. 5C ist im Wesentlichen identisch zu dem in Fig. 5A gezeigten Kabelbaum 15 ausgebildet. Im Folgenden wird ausschließlich auf die Unterschiede des in Fig. 5C gezeigten Kabelbaums 15 gegenüber dem in Fig. 5A den gezeigten Kabelbaum 15 eingegangen.

Beispielhaft wird auf das dritte bis fünfte Kabelbündel 150, 155, 160 verzichtet, sodass im dritten Schenkel 80 kein Kabelbündel 45, 146, 150, 155, 160 angeordnet ist und nur aus der Schaumummantelung 40 ausgebildet ist. Das erste Kabelbündel 45 ist dabei beispielhaft im ersten Schenkel 70 und das zweite Kabelbündel 146 ist beispielhaft im zweiten Schenkel 75 entlang der Geraden 95 verlaufend angeordnet.

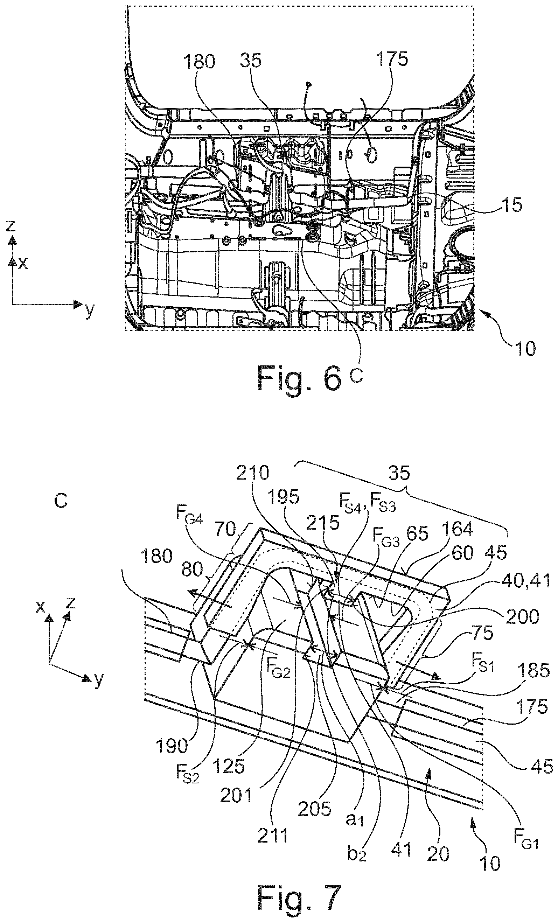

Fig. 6 zeigt eine perspektivische Darstellung eines Ausschnitts eines Kraftfahrzeugs 10 mit einem Kabelbaum 15 gemäß einer dritten Ausführungsform.

Der Kabelbaum 15 ist in Fig. 6 im Wesentlichen identisch zu dem in den Figuren 1 bis 4 gezeigten Kabelbaum 15 ausgebildet. Im Folgenden wird ausschließlich auf die Unterschiede des in Fig. 6 gezeigten Kabelbaums 15 gegenüber dem in den Figuren 1 bis 3 gezeigten Kabelbaum 15 eingegangen.

Der Kabelbaum 15 weist neben dem ersten Teilabschnitt 35 einen zweiten Teilabschnitt 175 und beispielhaft einen dritten Teilabschnitt 180 auf. Der erste Teilabschnitt 35 ist zwischen dem zweiten Teilabschnitt 175 und dem dritten Teilabschnitt 180 angeordnet und verbindet den zweiten Teilabschnitt 175 mit dem dritten Teilabschnitt 180. Im zweiten Teilabschnitt 175 ist der Kabelbaum 15 beispielsweise geradlinig geführt, während hingegen im dritten Teilabschnitt 180 der Kabelbaum 15 bogenförmig geführt ist. Im ersten Teilabschnitt 35 ist der Kabelbaum 15 im Wesentlichen U-förmig ausgeformt.

Fig. 7 zeigt einen in Fig. 6 markierten Ausschnitt C des Kraftfahrzeugs 10 in teilmontiertem Zustand.

In Fig. 7 ist das Kraftfahrzeug 10 schematisch vereinfacht dargestellt. Gegenüber der in Figuren 1 bis 3 gezeigten Ausgestaltung verläuft das erste Kabelbündel 45 entlang der ersten Aufnahme 60 folgend um die erste Aufnahme 60 herum. Dadurch ist eine Längserstreckung des Kabelbaums 15 in Längsrichtung besonders schmal. Der Kabelbaum 15 verläuft im Kraftfahrzeug 10 beispielsweise in Querrichtung. Auch eine andere Ausrichtung des Kabelbaums 15 im Kraftfahrzeug 10 ist möglich, jedoch beziehen sich die folgenden Erläuterungen auf diese Ausrichtung.

Die Führung des ersten Kabelbündels 45 der ersten Aufnahme 60 folgend hat den Vorteil, dass die erste und zweite Spannkraft F_{S1}, F_{S2} durch eine Steifigkeit des ersten Kabelbündels 45 gegenüber Figuren 1 bis 3 erhöht ist. Ferner kann der Kabelbaum 15 in Fig. 7 selbstverständlich zumindest eines des zweiten bis fünften Kabelbündels 146, 150, 155, 160 aufweisen. Das zweite bis fünfte Kabelbündel 146, 150, 155, 160 ist in diesem Fall parallel zu dem ersten Kabelbündel 45 in x-Richtung beabstandet geführt.

Zwischen dem ersten Teilabschnitt 35 und dem zweiten Teilabschnitt 175 kann eine erste Unterbrechung 185 in der Schaumummantelung 40 vorgesehen sein. Ebenso kann eine zweite Unterbrechung 190 zwischen dem ersten Teilabschnitt 35 und dem dritten Teilabschnitt 180 in der Schaumummantelung 40 vorgesehen sein. Durch die Unterbrechung 185, 190 kann das erste Kabelbündel 45 besonders gut an einer Kante des Fahrzeugbauteils 20 eng geführt werden.

Zusätzlich zu der in den Figuren 1 bis 3 gezeigten Ausgestaltung des ersten Teilabschnitts 35 weist die Schaumummantelung 40 eine Ausbuchtung 195 auf. Die Ausbuchtung 195 ist an der Innenseite 65 der ersten Aufnahme 60 angeordnet und ragt in die erste Aufnahme 60. Das erste Kabelbündel 45 ist an der Ausbuchtung 195 vorbeigeführt, sodass die Ausbuchtung 195 im Wesentlichen ausschließlich aus der Schaumummantelung 40 besteht.

In der Ausführungsform ist die Ausbuchtung 195 im Wesentlichen beispielhaft rechteckförmig ausgebildet, wobei sich die Ausbuchtung 195 im Wesentlichen in ihrer Haupterstreckungsrichtung in Querrichtung erstreckt. Die Ausbuchtung 195 kann beispielsweise (in Querrichtung) mittig am ersten Schenkel 70 auf der zum zweiten und dritten Schenkel 75, 80 zugewandten Seite des ersten Schenkels 70 angeordnet sein. In Längsrichtung (x-Richtung) weist die Ausbuchtung 195 im Wesentlichen die gleiche Erstreckung auf wie die Schaumummantelung 40 am ersten Schenkel 70, sodass die Ausbuchtung 195 beispielhaft bündig mit dem ersten Schenkel 70 abschließt. Die Ausbuchtung 195 weist auf einer dem zweiten Schenkel 75 zugewandten Seite eine erste Anlagefläche 200 und auf einer dem dritten Schenkel 80 zugewandten Seite eine zweite Anlagefläche 201 auf. Die erste und zweite Anlagefläche 200, 201 können jeweils in einer xz-Ebene angeordnet sein.

Das Fahrzeugbauteil 20 weist an der Ausformung 125 eine zweite Aufnahme 205 auf. Die zweite Aufnahme 205 ist beispielsweise auf einer dem ersten Schenkel 70 zugewandten Seite der Ausformung 125 angeordnet. Die zweite Aufnahme 205 ist beispielhaft nutförmig ausgebildet und verläuft beispielhaft in Längsrichtung. Somit erstreckt sich die zweite Aufnahme 205 im Wesentlichen quer dem Verlauf des ersten Kabelbündels 45 im Bereich des ersten Schenkels 70. Die zweite Aufnahme 205 weist eine erste Aufnahmeseitenfläche 210 und eine in Querrichtung gegenüberliegend zu der ersten Aufnahmeseitenfläche 210 angeordnete zweite Aufnahmeseitenfläche 211 auf. Die erste Aufnahmeseitenfläche 210 und die zweite Aufnahmeseitenfläche 211 können jeweils in einer xz-Ebene verlaufen. Ein zweiter Abstand a₁ der ersten Aufnahmeseitenfläche 210 zu der zweiten Aufnahmeseitenfläche 211 ist in demontiertem Zustand des Kabelbaums 15 geringer als eine maximale Breite b₂ der Ausbuchtung 195 in Querrichtung.

Die Ausbuchtung 195 greift in montiertem Zustand des Kabelbaums 15 an dem Fahrzeugbauteil 20 in die zweite Aufnahme 205 ein. In montiertem Zustand ist der Schaumwerkstoff 41 der Ausbuchtung 195 in der zweiten Aufnahme 205 zumindest in Querrichtung gestaucht. Dadurch drückt der Schaumwerkstoff 41 beispielshaft in y-Richtung mit einer dritten Spannkraft F_{S3} die erste Anlagefläche 200 nach außen gegen die erste Aufnahmeseitenfläche 210. Die erste Aufnahmeseitenfläche 210 wirkt mit einer dritten Gegenkraft F_{G3} gegen die dritte Spannkraft F_{S3}. Ferner drückt der Schaumwerkstoff 41 die zweite Anlagefläche 201 mit einer vierten Spannkraft F_{S4} gegen die zweite Aufnahmeseitenfläche 211. Die zweite Aufnahmeseitenfläche 211 wirkt mit einer vierten Gegenkraft *F_{G4}* gegen die vierte Spannkraft F_{S4}. Die dritte und vierte Spannkraft F_{S3}, F_{S4} und die jeweils entsprechende dritte und vierte Gegenkraft F_{G3}, F_{G4} bilden an der Ausbuchtung 195 eine zweite reibschlüssige Verbindung 215 mit der zugeordneten Aufnahmeseitenfläche 210, 211 aus. Mittels der zweiten reibschlüssigen Verbindung 215 wird der erste Schenkel 70 zusätzlich an dem Fahrzeugbauteil 20, insbesondere der Ausformung 125, befestigt. Dadurch wird ein Hin-und-her-Schlackern in *alle Richtungen* des ersten Schenkels 70 zuverlässig vermieden.

Abweichend von den Figuren 1 bis 3 ist der zweite Schenkel 75 und/oder der dritte Schenkel 80 verdickend vom jeweils festen Ende 85, 100 hin zum freien Ende 90, 105 ausgebildet. Dadurch weist der Kabelbaum 15 im ersten Teilabschnitt 35 eine im Wesentlichen C-förmige Ausgestaltung auf. Dadurch kann die erste und zweite Spannkraft F_{S1}, F_{S2} bei einer ansonsten rechteckförmig im Wesentlichen ausgebildeten Ausformung 125 zusätzlich erhöht werden.

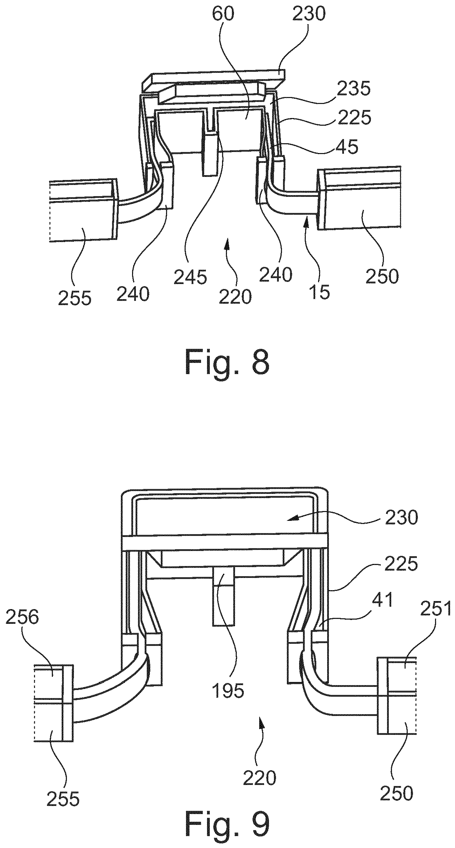

Fig. 8 zeigt eine perspektivische Darstellung einer Form 220 zur Herstellung eines Kabelbaums 15 gemäß einer vierten Ausführungsform. Der Kabelbaum 15 ist im Wesentlichen identisch zu dem in Fig. 6 und 7 gezeigten Kabelbaum 15 ausgebildet. Im Folgenden wird ausschließlich auf die Unterschiede des in Fig. 6 und 7 gezeigten Kabelbaums 15 zu dem in Fig. 8 herzustellenden Kabelbaum 15 eingegangen.

Die Form 220 weist ein erstes Formteil 225 und einen Deckel 230 auf, wobei der Deckel 230 und das erste Formteil 225 einen ersten Forminnenraum 235 begrenzen.

Eine Haupterstreckungsrichtung der Ausbuchtung 195 ist gegenüber Figuren 6 und 7 um 90° gedreht, sodass die Ausbuchtung 195 sich im Wesentlichen quer zum Verlauf des ersten Kabelbündels 45 im ersten Schenkel 70 erstreckt. Dadurch weist das erste Formteil 225 in der Draufsicht ein M-förmiges Grundprofil auf, wodurch der Kabelbaum 15 im ersten Teilabschnitt 35 ebenso im Wesentlichen M-förmig ausgebildet ist.

Dabei ist in dem ersten Forminnenraum 235 das erste Kabelbündel 45 verlaufend angeordnet. Der Deckel 230 verschließt oberseitig den ersten Forminnenraum 235. Seitlich kann an dem jeweiligen Ende des ersten Formteils 225 ein Dichtelement 240 angeordnet sein. Das Dichtelement 240, der Deckel 230 sowie das erste Formteil 225 begrenzen den ersten Forminnenraum 235. Das erste Formteil 225 weist einen in die erste Aufnahme 60 ragenden Stegabschnitt 245 zur Ausformung der Ausbuchtung 195 auf.

Beabstandet zum ersten Formteil 225 ist ein zweites Formteil 250 und ein drittes Formteil 255 angeordnet. Das zweite Formteil 250 ist zum Ausformen des zweiten Teilabschnitts 175 und das dritte Formteil 255 ist zur Ausformung des dritten Teilabschnitts 180 ausgebildet. Abweichend zu dem ersten Formteil 225 ist ein zweiter Forminnenraum 251 des zweiten Formteils 250 und/oder ein dritter Forminnenraum 256 des dritten Formteils 255 oberseitig offen als offene Form 220 ausgebildet.

Fig. 9 zeigt eine perspektivische Darstellung der in Fig. 8 gezeigten Form 220 zur Herstellung des in Fig. 8 gezeigten Kabelbaums 15.

In der Herstellung des Kabelbaums 15 wird das Kabelbündel 45, 146, 150, 155, 160 in die Form 220 eingelegt, der Schaumwerkstoff 41 eingespritzt und der Deckel 230 geschlossen. Alternativ kann der Schaumwerkstoff auch bei geschlossenem Deckel 230 in die Form 220 beispielsweise durch (kleine) Öffnungen im Deckel 230 eingespritzt werden. Der Schaumwerkstoff 41 quillt auf und umschließt das Kabelbündel 45, 146, 150, 155, 160. In Fig. 9 ist der Deckel 230 auf das erste Formteil 225 aufgesetzt. Dadurch wird ein Aufschwimmen des ersten Kabelbündels 45 beim Umschäumen des ersten Kabelbündels 45 mit dem Schaumwerkstoff 41 zur Ausbildung der Schaumummantelung 40 verhindert. Das Dichtelement 240 verhindert das Austreten des Schaumwerkstoffs 41 nach dem Einspritzen und beim Aufschäumen.

Ebenso wird der Schaumwerkstoff 41 in das zweite Formteil 250 und das dritte Formteil 255 eingespritzt.

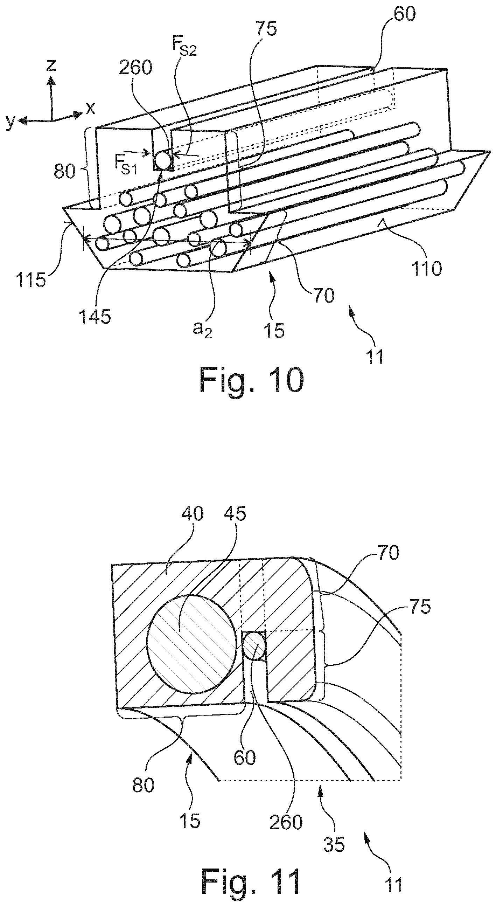

Fig. 10 zeigt eine perspektivische Darstellung einer Anordnung mit einem Kabelbaum 15 gemäß einer fünften Ausführungsform.

Der Kabelbaum 15 ist im Wesentlichen identisch zu dem in den Figuren 1 bis 3 gezeigten Kabelbaum 15 ausgebildet. Im Folgenden wird ausschließlich auf die Unterschiede des in Fig. 10 gezeigten Kabelbaums 15 gegenüber dem in den Figuren 1 bis 3 gezeigten Kabelbaum 15 eingegangen.

Abweichend zu den Figuren 1 bis 3 ist in Fig. 10 die erste Aufnahme 60 in Querrichtung deutlich schlanker ausgebildet, als in Fig. 1 bis 3 gezeigt. In der Ausführungsform ist das Fahrzeugbauteil 20 als fünftes elektrisches Kabel 260 ausgebildet, das in der ersten Aufnahme 60 angeordnet ist. Zusätzlich ist der erste Schenkel 70 beispielhaft trapezförmig ausgebildet, sodass die erste Seitenfläche 110 und die zweite Seitenfläche 115 jeweils gestuft ausgebildet sind. Dabei kann eine maximale Außenbreite a₂ des ersten Schenkels 70 mit abnehmendem Abstand des ersten Schenkels 70 hin zur ersten Aufnahme 60 zunehmen.

Die erste und zweite Spannkraft F_{S1}, F_{S2} fixiert mittels der ersten reibschlüssigen Verbindung 145 das fünfte elektrische Kabel 260 in der ersten Aufnahme 60. Das fünfte elektrische Kabel 260 kann beispielsweise eine Ersatzlitze sein, um beispielsweise eines der Kabel 50, 55 des ersten Kabelbündels 45 zu überbrücken. Die Überbrückung ist beispielsweise notwendig, wenn das erste oder das zweite elektrische Kabel 50, 55 beispielsweise einen Kabelbruch aufweist und defekt ist.

Die Fixierung des fünften elektrischen Kabels 260 an dem Kabelbaum 15 hat somit den Vorteil, dass auf einfache Weise in der Fertigung des Kraftfahrzeugs 10 mittels des fünften elektrischen Kabels 260 ein Ersatzkabel gegebenenfalls sogar nachträglich verlegt werden kann, ohne dass hierzu zusätzliche Befestigungsmittel notwendig sind. Alternativ kann das fünfte elektrische Kabel 260 auch ein zusätzliches Kabel sein, um eine Sonderfunktion des Kabelbaums 15 zu erfüllen. In diesen Ausführungsform kann mittels der erste Aufnahme 60 weitere Kabelbündel 150, 155, 160 gegebenenfalls nachträglich verlegt werden.

Fig. 11 zeigt eine perspektivische Schnittansicht durch eine Anordnung 11 mit einem Kabelbaum 15 gemäß einer sechsten Ausführungsform.

Der Kabelbaum 15 ist in Fig. 11 im Wesentlichen identisch zu dem in Fig. 10 gezeigten Kabelbaum 15 ausgebildet. Im Folgenden wird ausschließlich auf die Unterschiede des in Fig. 11 gezeigten Kabelbaums 15 gegenüber dem in Fig. 10 gezeigten Kabelbaum 15 eingegangen.

Abweichend zu Fig. 10 ist das erste Kabelbündel 45 zur Ausbildung des Hauptkabelbaums im ersten Schenkel 70 und im dritten Schenkel 80 abschnittsweise angeordnet. Der erste Schenkel 70 und der zweite Schenkel 75 werden im Wesentlichen durch die Schaumummantelung 40 ausgebildet, wobei in der Ausführungsform auf die Anordnung von weiteren Kabelbündeln 146, 150, 155, 160 in dem ersten Schenkel 70 und/oder in dem zweiten Schenkel 75 verzichtet wird.

Ferner ist der erste Teilabschnitt 35 bogenförmig geführt. Dazu eignet sich der Kabelbaum 15 besonders gut, um beispielsweise an einem Dachhimmel oder entlang der A- oder B-Säule geführt zu werden.

Das fünfte elektrische Kabel 260 kann beispielsweise als Antennenleitung ausgebildet sein. Durch die beabstandete Anordnung des fünfte elektrischen Kabels 260 zum ersten Kabelbündel 45 werden Störungen, insbesondere bei der Ausgestaltung des fünfte elektrischen Kabels 260 als Antennenkabel, verhindert.

Es wird darauf hingewiesen, dass anstatt des fünften elektrischen Kabels 260 selbstverständlich ein weiteres, sechstes Kabelbündel in die erste Aufnahme 60 eingelegt werden kann.

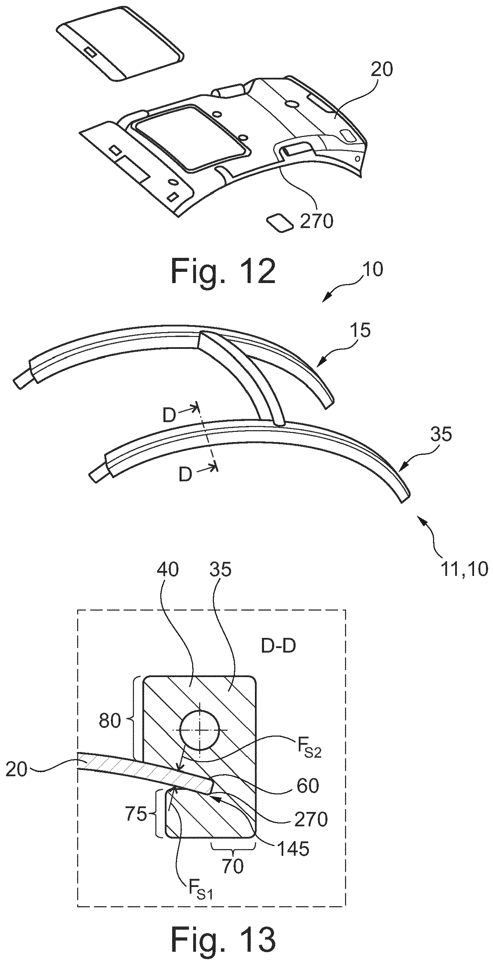

Fig. 12 zeigt eine perspektivische Explosionsdarstellung einer Anordnung 11 des Kraftfahrzeugs 10.

Das Fahrzeugbauteil 20 ist in der Ausführungsform beispielhaft als Dachhimmel ausgebildet. Der Dachhimmel ist ein größeres Element mit geringer Dicke und weist wenigstens eine Kante 270 auf, die beispielhaft umlaufend am Dachhimmel angeordnet ist. Der Kabelbaum 15 ist in der Ausführungsform beispielhaft H-förmig ausgeformt. Dabei ist der erste Teilabschnitt 35 bogenförmig geführt.

Fig. 13 zeigt eine Schnittansicht entlang einer in Fig. 12 gezeigten Schnittebene D-D durch den in Fig. 12 gezeigten Kabelbaum 15.

Der Kabelbaum 15 ist identisch zu dem in Fig. 11 gezeigten Kabelbaum 15 ausgebildet. Anstatt des fünfte elektrischen Kabels 260 greift jedoch in die erste Aufnahme 60 der Dachhimmel als Fahrzeugbauteil 20 ein, sodass die Kante 270 in der ersten Aufnahme 60 angeordnet ist. Durch die erste und zweite Spannkraft F_{S1}, F_{S2} wird der erste Teilabschnitt 35 an dem Dachhimmel 20 mittels der ersten reibschlüssigen Verbindung 145 befestigt. Dabei kann durch die elastische Ausgestaltung des Schaumwerkstoffs 41 der Schaumummantelung 40 sich die erste Aufnahme 60 an eine Kontur des Fahrzeugbauteils 20, insbesondere an den Falz des Dachhimmels 20, anschmiegen und so eine gute erste reibschlüssige Verbindung 145 zu dem Fahrzeugbauteil 20 sicherstellen. Durch die steife Ausgestaltung der Schaumummantelung 40 wird zusätzlich ein ungewolltes Abziehen des Kabelbaums 15 von dem Fahrzeugbauteil 20 zuverlässig verhindert. Zusätzlich erfüllt der Kabelbaum 15 eine dichtende Funktion am Dachhimmel 20. Des Weiteren dient die Schaumummantelung 40, um einen Klapperschutz am Dachhimmel 20 sicherzustellen.

Durch die in Figuren 12 bis 13 gezeigte Ausgestaltung des Kabelbaums 15 kann besonders leicht der Kabelbaum 15 an dem Fahrzeugbauteil 20 befestigt werden. Durch die Schaumummantelung 40 passt sich der Kabelbaum 15 auch selbst an die Geometrie des jeweiligen Fahrzeugbauteils 20 an und hält zuverlässig das erste Kabelbündel 45 an dem Fahrzeugbauteil 20. Ferner ist durch die erste und zweite Spannkraft F_{S1}, F_{S2} und die erste reibschlüssige Verbindung 145 eine dauerhafte Befestigung des Kabelbaums 15 sichergestellt.

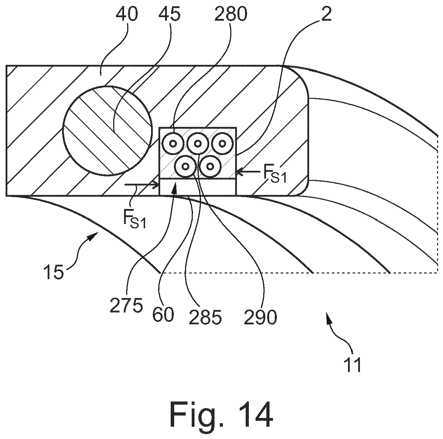

Fig. 14 zeigt eine perspektivische Schnittansicht durch eine Anordnung 11 mit einem Kabelbaum 15 gemäß einer siebten Ausführungsform.

Der Kabelbaum 15 ist in Fig. 11 im Wesentlichen identisch zu dem in Fig. 11 und 11 gezeigten Kabelbaum 15 ausgebildet. Im Folgenden wird ausschließlich auf die Unterschiede des in Fig. 14 gezeigten Kabelbaums 15 gegenüber dem in Fig. 11 gezeigten Kabelbaum 15 eingegangen.

Anstatt des fünften elektrischen Kabels 260 weist die Anordnung einen Sub-Kabelbaum 275 als Fahrzeugbauteil 20 auf. Der Sub-Kabelbaum 275 weist wenigstens eine sechstes Kabel 280, ein siebtes Kabel 285 und eine Ummantelung 290 auf. Das sechste Kabel 280 und das siebte Kabel 285 sind im Wesentlichen zueinander parallel verlaufend angeordnet. Die Ummantelung des Sub-Kabelbaums 275 kann als Band ausgebildet sein, das um das sechste und das siebte Kabel 280, 285 gewickelt ist. Auch kann die Ummantelung 290 als weitere Schaumummantelung analog zur Schaumummantelung 40 mit dem Schaumwerkstoff 41 ausgebildet sein, in die das sechste und das siebte Kabel 280, 285 zumindest abschnittsweise eingebettet sind. Die Ummantelung 290 verbindet das sechste Kabel 280 mit dem siebten Kabel 285.

Der Sub-Kabelbaum 275 ist in der ersten Aufnahme 60 angeordnet, wobei die Schaumummantelung 40 die Innenseite 65 der ersten Aufnahme 60 umfangsseitig gegen die Ummantelung 290 des Sub-Kabelbaums 275 drückt und die erste reibschlüssige Verbindung 145 mit der Ummantelung 290 ausbildet, wodurch der Sub-Kabelbaum 275 in der ersten Aufnahme 60 reibschlüssig befestigt ist. Auf weitere Haltemittel zur Befestigung des Sub-Kabelbaums 275 kann verzichtet werden.

Die Ummantelung 290 kann in ihrer äußeren konstruktiven Ausgestaltung zumindest bereichsweise korrespondierend zu der ersten Aufnahme 60 ausgebildet sein. So weist beispielsweise die Ummantelung 290 eine im wesentlichen rechteckförmige Ausgestaltung auf.

Der in den vorangegangenen Figuren erläuterte Kabelbaum 15 ist besonders einfach herstellbar und kann flexibel an die jeweiligen, zu verlegenden Geometrien angepasst werden. Ferner sind die Entwicklungskosten durch die flexiblen Gestaltungsmöglichkeiten des Kabelbaums 15 besonders gering. Ferner benötigt der Kabelbaum 15 besonders wenig Bauraum und dadurch ist eine Optimierung des notwendigen Bauraums sowohl für den Kabelbaum 15 als auch weitere zu verlegende, eingelegte Kabelbäume in Verbindung mit angrenzenden Komponenten besonders einfach. Ferner wird eine dauerhafte Befestigung des Kabelbaums 15 und gegebenenfalls des weitere elektrischen Kabel 260 am Kabelbaum 15 ohne weitere Befestigungsmittel sichergestellt.

### Bezugszeichenliste

- 10: Kraftfahrzeug
- 11: Anordnung
- 15: Kabelbaum
- 20: Fahrzeugbauteil
- 21: Fahrzeugsäule
- 25: Komponente
- 30: Komponente
- 35: erster Teilabschnitt
- 40: Schaumummantelung
- 41: Schaumwerkstoff
- 45: erstes Kabelbündel
- 50: erstes elektrisches Kabel
- 55: zweites elektrisches Kabel
- 60: erste Aufnahme
- 65: Innenseite
- 70: erster Schenkel
- 75: zweiter Schenkel
- 80: dritter Schenkel
- 85: erstes festes Ende
- 90: erstes freies Ende
- 95: Gerade
- 100: zweites festes Ende
- 105: zweites freies Ende
- 110: erste Seitenfläche
- 115: zweite Seitenfläche
- 120: Öffnung
- 125: Ausformung
- 130: Fahrzeugbauteilfläche
- 135: erste Außenfläche
- 140: zweite Außenfläche
- 145: erste reibschlüssige Verbindung
- 146: zweites Kabelbündel
- 150: drittes Kabelbündel
- 155: viertes Kabelbündel
- 160: fünftes Kabelbündel
- 164: Oberseite
- 165: drittes elektrisches Kabel
- 170: viertes elektrisches Kabel
- 175: zweiter Teilabschnitt
- 180: dritter Teilabschnitt
- 185: erste Unterbrechung
- 190: zweite Unterbrechung
- 195: Ausbuchtung
- 200: erste Anlagefläche
- 201: zweite Anlagefläche
- 205: zweite Aufnahme
- 210: erste Aufnahmeseitenfläche
- 211: zweite Aufnahmeseitenfläche
- 215: zweite reibschlüssige Verbindung
- 220: Form
- 225: erstes Formteil
- 230: Deckel
- 235: erster Forminnenraum
- 240: Dichtelement
- 245: Stegabschnitt
- 250: zweites Formteil
- 251: zweiter Forminnenraum
- 255: drittes Formteil
- 256: dritter Forminnenraum
- 260: fünftes elektrisches Kabel
- 265: Dachhimmel
- 270: Kante
- 275: Sub-Kabelbaum
- 280: sechstes Kabel
- 285: siebtes Kabel
- 290: Ummantelung

- a₁: zweiter Abstand
- a₂: maximale Außenbreite
- b₁: Innenbreite
- b₂: maximale Breite
- F_{S1}: **erste** Spannkraft
- F_{S2}: zweite Spannkraft
- F_{S3}: dritte Spannkraft
- F_{G1}: erste Gegenkraft
- F_{G2}: zweite Gegenkraft
- F_{G3}: dritte Gegenkraft
- F_{M}: Montagekraft

## Patentansprüche

1. Kabelbaum (15) für ein Kraftfahrzeug (10),
- aufweisend eine Schaumummantelung (40) und wenigstens ein erstes Kabelbündel (45) mit einem ersten elektrischen Kabel (50) und einem zweiten elektrischen Kabel (55),
- wobei das erste Kabelbündel (45) zumindest abschnittsweise in der Schaumummantelung (40) eingebettet ist und die Schaumummantelung (40) das erste elektrische Kabel (50) mit dem zweiten elektrischen Kabel (55) mechanisch verbindet,
- wobei der Kabelbaum (15) in zumindest einem ersten Teilabschnitt (35) eine erste Aufnahme (60) ausformt,
- wobei die erste Aufnahme (60) ausgebildet ist, ein Fahrzeugbauteil (20) des Kraftfahrzeugs (10) zumindest abschnittsweise aufzunehmen,
- wobei die Schaumummantelung (40) in wenigstens einem ersten Teilabschnitt (35) des Kabelbaums (15) ausgebildet ist, eine Innenseite (65) der ersten Aufnahme (60) an das Fahrzeugbauteil (20) zur Ausbildung einer ersten reibschlüssigen Verbindung (145) mit dem Fahrzeugbauteil (20) anzupressen,
- wobei zumindest im ersten Teilabschnitt (35) der Kabelbaum (15) einen ersten Schenkel (70), einen zweiten Schenkel (75) und einen dritten Schenkel (80) aufweist,
- wobei der zweite Schenkel (75) und der dritte Schenkel (80) beabstandet zueinander an dem ersten Schenkel (70) an einer gemeinsamen Seite des ersten Schenkels (70) angeordnet sind,
- wobei der erste bis dritte Schenkel (70, 75, 80) die erste Aufnahme (60) begrenzen,
- wobei in einem der Schenkel (70, 75, 80) das erste Kabelbündel (45) angeordnet ist.

2. Kabelbaum (15) nach Anspruch 1,
- wobei im ersten Teilabschnitt (35) der Kabelbaum (15) C-förmig oder U-förmig oder M-förmig ausgeformt ist.

3. Kabelbaum (15) nach einem der vorhergehenden Ansprüche,
- wobei das erste Kabel (50) und das zweite Kabel (55) sich im Wesentlichen entlang einer Geraden (95) erstrecken,
- die erste Aufnahme (60) in einer ersten Richtung (y) geneigt zu der Geraden (95) breiter ausgebildet ist als in eine zweite Richtung (z) geneigt zu der ersten Richtung (y) und der Geraden (95).

4. Kabelbaum (15) nach einem der vorhergehenden Ansprüche,
- aufweisend ein zweites Kabelbündel (146) mit wenigstens einem dritten elektrischen Kabel (165),
- wobei das zweite Kabelbündel (146) beabstandet zu dem ersten Kabelbündel (45) in der Schaumummantelung (40) parallel zu dem ersten Kabelbündel (45) verlaufend eingebettet ist,
- wobei die Schaumummantelung (40) das erste Kabelbündel (45) mechanisch mit dem zweiten Kabelbündel (146) verbindet.

5. Kabelbaum (15) nach einem der vorhergehenden Ansprüche,
- wobei das erste Kabelbündel (45) im ersten Schenkel (70) und das zweite Kabelbündel (146) im zweiten Schenkel (75) verlaufend angeordnet sind,
- oder
- wobei das erste Kabelbündel (45) im zweiten Schenkel (75) und das zweite Kabelbündel (146) im dritten Schenkel (80) verlaufend angeordnet sind.

6. Kabelbaum (15) nach einem der vorhergehenden Ansprüche ,
- wobei der zweite Schenkel (75) an einem ersten festen Ende (85) mit dem ersten Schenkel (70) verbunden ist,
- wobei an einem zum ersten festen Ende (85) beabstandet angeordneten ersten freien Ende (90) des zweiten Schenkels (75) der zweite Schenkel (75) gegenüber dem ersten festen Ende (85) verdickt oder verjüngt ausgebildet ist.

7. Kabelbaum (15) nach einem der vorhergehenden Ansprüche,
- wobei die erste Aufnahme (60) parallel zu dem ersten Kabelbündel (45) geführt ist,
- oder
- wobei das erste Kabelbündel (45) der Innenseite (65) der ersten Aufnahme (60) folgend um die erste Aufnahme (60) geführt in der Schaumummantelung (40) angeordnet ist.

8. Kabelbaum (15) nach einem der vorhergehenden Ansprüche,
- wobei die Schaumummantelung (40) im ersten Teilabschnitt (35) des Kabelbaums (15) eine Ausbuchtung (195) mit wenigstens einer ersten Anlagefläche (200) aufweist,
- wobei die Ausbuchtung (195) in die erste Aufnahme (60) ragt,
- wobei die Ausbuchtung (195) ausgebildet ist, in eine zweite Aufnahme (205) des Fahrzeugbauteils (20) einzugreifen und eine zweite reibschlüssige Verbindung (215) mit dem Fahrzeugbauteil (20) auszubilden.

9. Kabelbaum (15) nach einem der vorhergehenden Ansprüche,
- wobei die Schaumummantelung (40) wenigstens einen der folgenden Schaumwerkstoffe (41) aufweist: Hartschaum, geschlossenporiger Schaum, Polyurethan, Polystyrol, Schaumwerkstoff (41) mit einer Druck-Elastizitätsmodul von 3 N/mm² bis 10 N/mm², Polyamid.

10. Anordnung (11),
- mit einem Kabelbaum (15) nach einem der vorhergehenden Ansprüche und einem Fahrzeugbauteil (20),
- wobei das Fahrzeugbauteil (20) zumindest abschnittsweise in die erste Aufnahme (60) eingreift,
- wobei die Schaumummantelung (40) mechanisch gespannt ist und die Innenseite (65) der ersten Aufnahme (60) gegen das Fahrzeugbauteil (20) derart presst, dass die Innenseite (65) mit dem Fahrzeugbauteil (20) die erste reibschlüssige Verbindung (145) ausbildet.

11. Anordnung (11) nach Anspruch 10,
- wobei das Fahrzeugbauteil (20) eine Ausformung (125), insbesondere eine Wölbung und/oder eine Fahrzeugsäule (21) und/oder einen Holm und/oder einen Falz, aufweist,
- wobei erste Aufnahme (60) die Ausformung (125) aufnimmt und vorzugsweise ausfüllt.

12. Anordnung nach Anspruch 10 oder 11,
- wobei die Innenseite (65) vollflächig und/oder zu wenigstens 80% einer Fläche der Innenseite (65) an der Ausformung (125) anliegt.

13. Anordnung (11) nach Anspruch 11 oder 12 und Anspruch 8,
- wobei in der Ausformung (125) des Fahrzeugbauteils (20) eine zweite Aufnahme (205) angeordnet ist,
- wobei die Ausbuchtung (195) in die zweite Aufnahme (205) eingreift,
- wobei ein Schaumwerkstoff (41) der Ausbuchtung (195) in der zweiten Aufnahme (205) verpresst ist und die Schaumummantelung (40) die erste Anlagefläche (200) der Ausbuchtung (195) an eine erste Aufnahmeseitenfläche (210) der zweiten Aufnahme (205) presst und die zweite reibschlüssige Verbindung (215) zwischen der der ersten Anlagefläche (200) und der der ersten Aufnahmeseitenfläche (210) ausbildet.

14. Anordnung (11) nach einem der Ansprüche 10 bis 13,
- wobei das Fahrzeugbauteil (20) ein fünftes elektrisches Kabel (260) ist,
- wobei das fünfte elektrische Kabel (260) in der ersten Aufnahme (60) angeordnet ist,
- wobei die Schaumummantelung (40) die Innenseite (65) der ersten Aufnahme (60) umfangsseitig gegen das fünften elektrischen Kabels (260) drückt und die erste reibschlüssige Verbindung (145) mit dem fünften elektrischen Kabel (260) ausbildet.

15. Anordnung (11) nach einem der Ansprüche 10 bis 14,
- wobei das Fahrzeugbauteil (20) ein Sub-Kabelbaum (275) ist,
- wobei der Sub-Kabelbaum (275) wenigstens ein sechstes Kabel (280), ein siebtes Kabel (285) und eine Ummantelung (290) aufweist,
- wobei die Ummantelung (290) das sechste Kabel (280) mit dem siebten Kabel (285) verbindet und zumindest umfangsseitig das sechste Kabel (280) und das siebte Kabel (285) umgreift,
- wobei der Sub-Kabelbaum (275) in der ersten Aufnahme (60) angeordnet ist,
- wobei die Schaumummantelung (40) die Innenseite (65) der ersten Aufnahme (60) umfangsseitig gegen die Ummantelung (290) des Sub-Kabelbaums (275) drückt und die erste reibschlüssige Verbindung (145) mit der Ummantelung (290) ausbildet.

## Claims

1. Cable harness (15) for a motor vehicle (10),
- having a foam sheathing (40) and at least a first cable bundle (45) with a first electrical cable (50) and a second electrical cable (55),
- wherein the first cable bundle (45) is at least partly embedded in the foam sheathing (40) and the foam sheathing (40) mechanically connects the first electrical cable (50) to the second electrical cable (55),
- wherein the cable harness (15) in at least a first subsection (35) forms a first receptacle (60),
- wherein the first receptacle (60) is designed to receive at least partly a vehicle component (20) of the motor vehicle (10),
- wherein the foam sheathing (40) in at least a first subsection (35) of the cable harness (15) is designed to press an inner side (65) of the first receptacle (60) against the vehicle component (20) to form a first frictional connection (145) with the vehicle component (20),
- wherein at least in the first subsection (35) the cable harness (15) has a first leg (70), a second leg (75) and a third leg (80),
- wherein the second leg (75) and the third leg (80) are arranged at a distance from another on the first leg (70), on one and the same side of the first leg (70),
- wherein the first to third legs (70, 75, 80) delimit the first receptacle (60),
- wherein the first cable bundle (45) is arranged in one of the legs (70, 75, 80).

2. Cable harness (15) according to Claim 1,
- wherein in the first subsection (35) the cable harness (15) is of a C-shaped or U-shaped or M-shaped form.

3. Cable harness (15) according to one of the preceding claims,
- wherein the first cable (50) and the second cable (55) extend substantially along a straight line (95),
- the first receptacle (60) is made wider in a first direction (y) inclined in relation to the straight line (95) than in a second direction (z) inclined in relation to the first direction (y) and the straight line (95).

4. Cable harness (15) according to one of the preceding claims,
- having a second cable bundle (146) with at least a third electrical cable (165),
- wherein the second cable bundle (146) is embedded in the foam sheathing (40) at a distance from the first cable bundle (45) and running parallel to the first cable bundle (45),
- wherein the foam sheathing (40) mechanically connects the first cable bundle (45) to the second cable bundle (146).

5. Cable harness (15) according to one of the preceding claims,
- wherein the first cable bundle (45) is arranged running in the first leg (70) and the second cable bundle (146) is arranged running in the second leg (75),
- or
- wherein the first cable bundle (45) is arranged running in the second leg (75) and the second cable bundle (146) is arranged running in the third leg (80).

6. Cable harness (15) according to one of the preceding claims,
- wherein the second leg (75) is connected at a first fixed end (85) to the first leg (70),
- wherein, at a first free end (90) of the second leg (75), arranged at a distance from the first fixed end (85), the second leg (75) is made thicker or narrower as compared to the first fixed end (85).

7. Cable harness (15) according to one of the preceding claims,
- wherein the first receptacle (60) is disposed parallel to the first cable bundle (45),
- or
- wherein the first cable bundle (45) is arranged in the foam sheathing (40), following the inner side (65) of the first receptacle (60) and disposed around the first receptacle (60).

8. Cable harness (15) according to one of the preceding claims,
- wherein the foam sheathing (40) in the first subsection (35) of the cable harness (15) has a bulge (195) with at least a first contact surface (200),
- wherein the bulge (195) protrudes into the first receptacle (60),
- wherein the bulge (195) is designed to engage in a second receptacle (205) of the vehicle component (20) and to form a second frictional connection (215) with the vehicle component (20).

9. Cable harness (15) according to one of the preceding claims,
- wherein the foam sheathing (40) comprises at least one of the following foam materials (41): rigid foam, closed-cell foam, polyurethane, polystyrene, foam material (41) with a modulus of elasticity in compression of 3 N/mm² to 10 N/mm², polyamide.

10. Arrangement (11),
- with a cable harness (15) according to one of the preceding claims and a vehicle component (20),
- wherein the vehicle component (20) at least partly engages in the first receptacle (60),
- wherein the foam sheathing (40) is mechanically loaded and presses the inner side (65) of the first receptacle (60) against the vehicle component (20) in such a way that the inner side (65) forms the first frictional connection (145) with the vehicle component (20).

11. Arrangement (11) according to Claim 10,
- wherein the vehicle component (20) has a formation (125), in particular a convexity and/or a vehicle pillar (21) and/or a beam and/or a rebate,
- wherein the first receptacle (60) receives and is preferably filled by the formation (125).

12. Arrangement according to Claim 10 or 11,
- wherein the inner side (65) lies against the formation (125) over its full surface area and/or over at least 80% of a surface area of the inner side (65).

13. Arrangement (11) according to Claim 11 or 12 and Claim 8,
- wherein a second receptacle (205) is arranged in the formation (125) of the vehicle component (20),
- wherein the bulge (195) engages in the second receptacle (205),
- wherein a foam material (41) of the bulge (195) is pressed in the second receptacle (205) and the foam sheathing (40) presses the first contact surface (200) of the bulge (195) against a first receptacle side surface (210) of the second receptacle (205) and forms the second frictional connection (215) between the first contact surface (200) and the first receptacle side surface (210).

14. Arrangement (11) according to one of Claims 10 to 13,
- wherein the vehicle component (20) is a fifth electrical cable (260),
- wherein the fifth electrical cable (260) is arranged in the first receptacle (60),
- wherein the foam sheathing (40) presses the inner side (65) of the first receptacle (60) circumferentially against the fifth electrical cable (260) and forms the first frictional connection (145) with the fifth electrical cable (260).

15. Arrangement (11) according to one of Claims 10 to 14,
- wherein the vehicle component (20) is a sub cable harness (275),
- wherein the sub cable harness (275) has at least a sixth cable (280), a seventh cable (285) and a sheathing (290),
- wherein the sheathing (290) connects the sixth cable (280) to the seventh cable (285) and at least circumferentially encloses the sixth cable (280) and the seventh cable (285),
- wherein the sub cable harness (275) is arranged in the first receptacle (60),
- wherein the foam sheathing (40) presses the inner side (65) of the first receptacle (60) circumferentially against the sheathing (290) of the sub cable harness (275) and forms the first frictional connection (145) with the sheathing (290).

## Revendications

1. Faisceau de câbles (15) pour un véhicule automobile (10),
- comprenant une enveloppe en mousse (40) et au moins un premier groupe de câbles (45) avec un premier câble électrique (50) et un deuxième câble électrique (55),
- le premier groupe de câbles (45) étant noyé au moins partiellement dans l'enveloppe en mousse (40) et l'enveloppe en mousse (40) reliant mécaniquement le premier câble électrique (50) au deuxième câble électrique (55),
- le faisceau de câbles (15) formant un premier logement (60) dans au moins une première portion partielle (35),
- le premier logement (60) étant conçu pour recevoir au moins partiellement un composant (20) du véhicule automobile (10),
- l'enveloppe en mousse (40) étant formée dans au moins une première portion partielle (35) du faisceau de câbles (15), un côté intérieur (65) du premier logement (60) étant pressé contre le composant de véhicule (20) pour former une première liaison par friction (145) avec le composant de véhicule (20),
- le faisceau de câbles (15) présentant, au moins dans la première portion (35), une première branche (70), une deuxième branche (75) et une troisième branche (80),
- la deuxième branche (75) et la troisième branche (80) étant agencées à distance l'une de l'autre sur la première branche (70) sur un côté commun de la première branche (70),
- les première à troisième branches (70, 75, 80) délimitant le premier logement (60),
- le premier groupe de câbles (45) étant agencé dans l'une des branches (70, 75, 80).

2. Faisceau de câbles (15) selon la revendication **1,**
- dans lequel la première portion (35) du faisceau de câbles (15) a une forme en **C,** en U ou en **M.**

3. Faisceau de câbles (15) selon l'une des revendications précédentes,
- dans lequel le premier câble (50) et le deuxième câble (55) s'étendent essentiellement le long d'une ligne droite (95),
- le premier logement (60) est plus large dans une première direction (y) inclinée par rapport à la ligne droite (95) que dans une deuxième direction (z) inclinée par rapport à la première direction (y) et à la ligne droite (95).

4. Faisceau de câbles (15) selon l'une des revendications précédentes,
- comprenant un deuxième groupe de câbles (146) avec au moins un troisième câble électrique (165),
- le deuxième groupe de câbles (146) étant intégré dans l'enveloppe en mousse (40) à distance du premier groupe de câbles (45) et parallèlement à ce groupe de câbles (45),
- l'enveloppe en mousse (40) reliant mécaniquement le premier groupe de câbles (45) au deuxième groupe de câbles (146).

5. Faisceau de câbles (15) selon l'une des revendications précédentes,
- dans lequel le premier groupe de câbles (45) est agencé de manière continue dans la première branche (70) et le deuxième groupe de câbles (146) est agencé dans la deuxième branche (75),
- ou
- dans lequel le premier groupe de câbles (45) est agencé de manière continue dans la deuxième branche (75) et le deuxième groupe de câbles (146) est agencé dans la troisième branche (80).

6. Faisceau de câbles (15) selon l'une des revendications précédentes,
- dans lequel la deuxième branche (75) est reliée à la première branche (70) par une première extrémité fixe (85),
- dans lequel la deuxième branche (75) est épaissie ou rétrécie par rapport à la première extrémité fixe (85) au niveau d'une première extrémité libre (90) de la deuxième branche (75) agencée à distance de la première extrémité fixe (85).

7. Faisceau de câbles (15) selon l'une des revendications précédentes,
- dans lequel le premier logement (60) est guidé parallèlement au premier groupe de câbles (45),
- ou
- dans lequel le premier groupe de câbles (45) est agencé dans l'enveloppe en mousse (40) en suivant le côté intérieur (65) du premier logement (60) et en étant guidé autour du premier logement (60).

8. Faisceau de câbles (15) selon l'une des revendications précédentes,
- l'enveloppe en mousse (40) présentant, dans la première partie (35) du faisceau de câbles (15), une protubérance (195) ayant au moins une première surface d'appui (200),
- la protubérance (195) s'étendant dans le premier logement (60),
- la protubérance (195) étant conçue de façon à venir en engagement dans un deuxième logement (205) du composant de véhicule (20) et pour former une deuxième liaison par friction (215) avec le composant de véhicule (20).

9. Faisceau de câbles (15) selon l'une des revendications précédentes,
- dans lequel l'enveloppe en mousse (40) présente au moins l'un des matériaux en mousse (41) suivants : mousse dure, mousse à cellules fermées, polyuréthane, polystyrène, matériau en mousse (41) avec un module d'élasticité en compression de 3 N/mm² à 10 N/mm², polyamide.

10. Agencement (11),
- comprenant un faisceau de câbles (15) selon l'une des revendications précédentes et un composant de véhicule (20),
- le composant de véhicule (20) s'engageant au moins partiellement dans le premier logement (60),
- l'enveloppe en mousse (40) étant tendue mécaniquement et pressant le côté intérieur (65) du premier logement (60) contre le composant de véhicule (20) de telle sorte que le côté intérieur (65) forme avec le composant de véhicule (20) la première liaison par friction (145).

11. Agencement (11) selon la revendication 10,
- le composant de véhicule (20) présentant une forme (125), en particulier un bombement et/ou un montant de véhicule (21) et/ou un longeron et/ou une feuillure,
- le premier logement (60) recevant la forme (125), et, de préférence, la remplissant.

12. Agencement selon la revendication 10 ou la revendication 11,
- dans lequel le côté intérieur (65) s'étend contre avec la forme (125) sur toute la surface et/ou sur au moins 80 % d'une surface du côté intérieur (65).

13. Agencement (11) selon la revendication 11 ou la revendication 12 et la revendication 8,
- un deuxième logement (205) étant agencé dans la forme (125) du composant (20) du véhicule,
- la protubérance (195) venant en engagement dans le deuxième logement (205),
- un matériau en mousse (41) de la protubérance (195) étant comprimé dans le deuxième logement (205) et l'enveloppe en mousse (40) pressant la première surface d'appui (200) de la protubérance (195) contre une première surface latérale de réception (210) du deuxième logement (205) et formant la deuxième liaison par friction (215) entre la première surface d'appui (200) et la première surface latérale de réception (210).

14. Agencement (11) selon l'une des revendications 10 à 13,
- le composant de véhicule (20) étant un cinquième câble électrique (260),
- le cinquième câble électrique (260) étant agencé dans le premier logement (60),
- l'enveloppe en mousse (40) pressant le côté intérieur (65) du premier logement (60) contre le cinquième câble électrique (260) sur le pourtour et formant la première liaison par friction (145) avec le cinquième câble électrique (260).

15. Agencement (11) selon l'une des revendications 10 à 14,
- le composant de véhicule (20) étant un groupe secondaire (275) de câbles,
- le groupe secondaire (275) de câbles comportant au moins un sixième câble (280), un septième câble (285) et une gaine (290),
- l'enveloppe (290) reliant le sixième câble (280) au septième câble (285) et entourant au moins sur le pourtour le sixième câble (280) et le septième câble (285),
- le groupe secondaire (275) de câbles étant agencé dans le premier logement (60),
- l'enveloppe en mousse (40) pressant le côté intérieur (65) du premier logement (60) sur le pourtour contre l'enveloppe (290) du groupe secondaire (275) de câbles et formant la première liaison par friction (145) avec l'enveloppe (290).
